(19) Europäisches Patentamt
European Patent Office
Office européen des brevets

(11) EP 1 302 804 A2

(12) EUROPÄISCHE PATENTANMELDUNG

(43) Veröffentlichungstag:
16.04.2003 Patentblatt 2003/16

(51) Int Cl.⁷: **G02B 21/00**, G06T 7/00,
G01J 3/50, G01J 3/443,
G01N 21/64

(21) Anmeldenummer: 02021433.4

(22) Anmeldetag: 25.09.2002

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **16.10.2001 DE 10151216**

(71) Anmelder: **CARL ZEISS JENA GmbH
07745 Jena (DE)**

(72) Erfinder: **Wolleschensky, Ralf
99510 Schöten (DE)**

(74) Vertreter: **Hampe, Holger
Carl Zeiss Jena GmbH,
Zentralbereich Recht und Patente,
Patentabteilung
07740 Jena (DE)**

(54) **Verfahren zur optischen Erfassung von charakteristischen Grössen einer beleuchteten Probe**

(57) Verfahren zur optischen Erfassung von charakteristischen Größen einer beleuchteten Probe,
wobei das von der Probe rückgestreute, reflektierte und/oder fluoreszierte und/oder transmittierte Signal mit einem ortsauflösenden Detektor in mehreren Kanälen detektiert wird, indem die von der Probe kommende Strahlung spektral aufgespalten auf den Detektor abgebildet wird und
eine Verknüpfung von Detektionskanälen erfolgt, so daß die Anzahl der ausgelesenen und weiterverarbeiteten Meßwerte kleiner ist als die Zahl der Detektionskanäle.

Figure: 6

EP 1 302 804 A2

**Beschreibung**

Die Erfindung bezieht sich auf ein Verfahren und eine Anordnung in der Fluoreszenzmikroskopie, insbesondere der Laser Scanning Mikroskopie, der Fluoreszenz-Korrelationsspektroskopie und der Scanning Nahfeldmikroskopie, zur Untersuchung von vorwiegend biologischen Proben, Präparaten und zugehörigen Komponenten. Mit eingeschlossen sind auf Fluoreszenzdetektion basierenden Verfahren zum Screenen von Wirkstoffen (High Throughput Sceening) sowie Durchflußzytometer. Durch den Übergang von der Detektion von wenigen breiten spektralen Farbstoffbändern zur simultanen Aufnahme kompletter Spektren eröffnen sich neue Möglichkeiten bei der Identifikation, Separation und Zuordnung der meist analytischen oder funktionalen Probeneigenschaften zu räumlichen Teilstrukturen oder dynamischen Prozessen. Simultan-Untersuchungen von Proben mit Mehrfachfluorophoren werden damit bei überlappenden Fluoreszenzspektren auch in räumlichen Strukturen von dicken Proben möglich. Durch die Anordnung wird die spektrale Auflösung der Detektionseinheit erhöht.

**Stand der Technik**

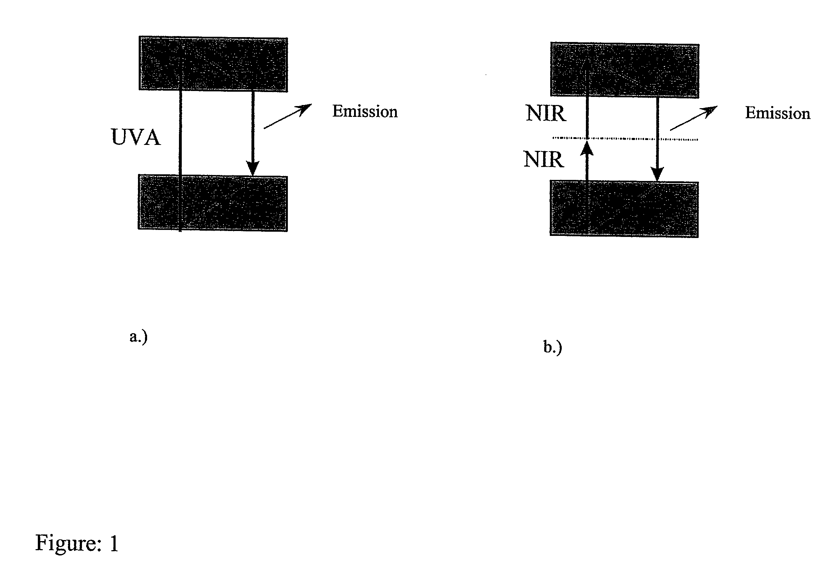

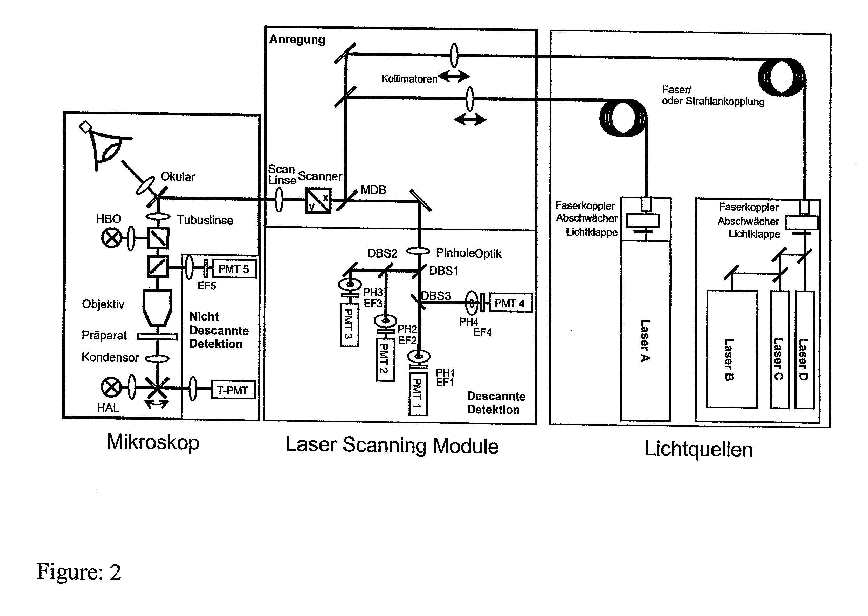

Ein klassisches Anwendungsgebiet der Lichtmikroskopie zur Untersuchung von biologischen Präparaten ist die Fluoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.
Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet (Abb. 1a). Die so angeregten Farbstoffmoleküle können auf verschiedene Weise in den Grundzustand zurück gelangen. In der Fluoreszenzmikroskopie ist der Übergang unter Aussendung eines Fluoreszenzphotons am wichtigsten. Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.
Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen, möglich. Grundsätzlich können jedoch auch mehrere Teile eines Präparates gleichzeitig mit verschiedenen sich spezifisch anlagernden Farbstoffen eingefärbt werden (Mehrfachfluoreszenz). Zur Unterscheidung, der von den einzelnen Farbstoffen ausgesendeten Fluoreszenzsignale, werden wiederum spezielle dichroitischen Strahlteiler verwendet.
Neben der Anregung der Farbstoffmoleküle mit einem hochenergetischen Photon (Einphotonen-Absorption) ist auch eine Anregung mit mehreren Photonen geringerer Energie möglich (Abb. 1b). Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.
Der Stand der Technik soll im folgenden beispielhaft anhand eines konfokalen Laser-Scanning- Mikroskopes (LSM) erläutert werden (Abb. 2).
Ein LSM gliedert sich im wesentlichen in 4 Module: Lichtquelle, Scanmodul, Detektionseinheit und Mikroskop. Diese Module werden im folgenden näher beschrieben. Es wird zusätzlich auf DE19702753A1 verwiesen.
Zur spezifischen Anregung der verschiedenen Farbstoffe in einem Präparat werden in einem LSM Laser mit verschiedenen Wellenlängen eingesetzt. Die Wahl der Anregungswellenlänge richtet sich nach den Absorptionseigenschaften der zu untersuchenden Farbstoffe. Die Anregungsstrahlung wird im Lichtquellenmodul erzeugt. Zum Einsatz kommen hierbei verschiedene Laser (Argon, Argon Krypton, TiSa-Laser). Weiterhin erfolgt im Lichtquellenmodul die Selektion der Wellenlängen und die Einstellung der Intensität der benötigten Anregungswellenlänge, z.B. durch den Einsatz eines akusto optischen Kristalls. Anschließend gelangt die Laserstrahlung über eine Faser oder eine geeignete Spiegelanordnung in das Scanmodul.
Die in der Lichtquelle erzeugte Laserstrahlung wird mit Hilfe des Objektivs (2) beugungsbegrenzt über die Scanner, die Scanoptik und die Tubuslinse in das Präparat fokussiert. Der Fokus rastert punktförmig die Probe in x-y-Richtung ab. Die Pixelverweilzeiten beim Scannen über die Probe liegen meist im Bereich von weniger als einer Mikrosekunde bis zu einigen Sekunden.
Bei einer konfokalen Detektion (descanned Detection) des Fluoreszenzlichtes, gelangt das Licht das aus der Fokusebene (Specimen) und aus den darüber- und darunterliegenden Ebenen emittiert wird, über die Scanner auf einen dichroitischen Strahlteiler (MDB). Dieser trennt das Fluoreszenzlicht vom Anregungslicht. Anschließend wird das Fluoreszenzlicht auf eine Blende (konfokale Blende / Pinhole) fokussiert, die sich genau in einer zur Fokusebene konjugierten Ebene befindet. Dadurch werden Fluoreszenzlichtanteile außerhalb des Fokus unterdrückt. Durch Variieren der Blendengröße kann die optische Auflösung des Mikroskops eingestellt werden. Hinter der Blende befindet sich ein weiterer dichroitischer Blockfilter (EF) der nochmals die Anregungsstrahlung unterdrückt. Nach Passieren des Blockfilters wird das Fluoreszenzlicht mittels eines Punktdetektors (PMT) gemessen.

Bei Verwendung einer Mehrphotonen-Absorption erfolgt die Anregung der Farbstofffluoreszenz in einem kleinen Volumen in dem die Anregungsintensität besonders hoch ist. Dieser Bereich ist nur unwesentlich größer als der detektierte Bereich bei Verwendung einer konfokalen Anordnung. Der Einsatz einer konfokalen Blende kann somit entfallen und die Detektion kann direkt nach dem Objektiv erfolgen (non descannte Detektion).

In einer weiteren Anordnung zur Detektion einer durch Mehrphotonenabsorption angeregten Farbstofffluoreszenz erfolgt weiterhin eine descannte Detektion, jedoch wird diesmal die Pupille des Objektives in die Detektionseinheit abgebildet (nichtkonfokal descannte Detektion).

Von einem dreidimensional ausgeleuchteten Bild wird durch beide Detektionsanordnungen in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.

Das LSM ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

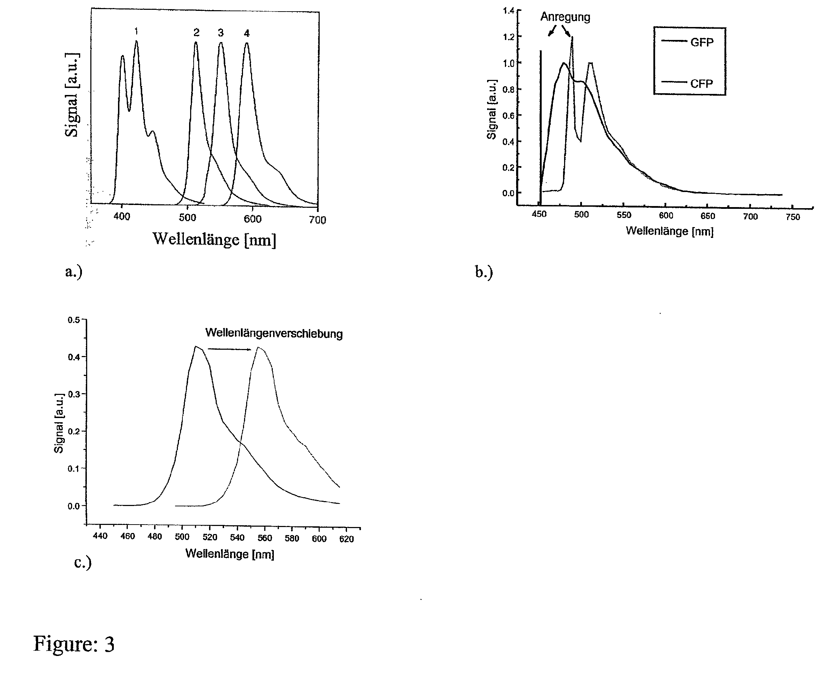

In biomedizinischen Applikationen werden zur Zeit mehrere verschiedene Zellregionen mit verschiedenen Farbstoffen gleichzeitig markiert (Multifluoreszenz). Die einzelnen Farbstoffe können mit den Stand der Technik entweder aufgrund verschiedener Absorptionseigenschaften oder Emissionseigenschaften (Spektren) getrennt nachgewiesen werden (Abb 3a). Aufgetragen sind beispielhaft Emissionssignale in Abhängigkeit von der Wellenlänge für verschiedene Farbstoffe (1-4). Zum getrennten Nachweis erfolgt eine zusätzliche Aufspaltung des Fluoreszenzlichts von mehreren Farbstoffen mit den Nebenstrahlteilern (DBS) und eine getrennte Detektion der einzelnen Farbstoffemissionen in verschiedenen Punktdetektoren (PMT x). Eine flexible Anpassung der Detektion und der Anregung an entsprechende neue Farbstoffeigenschaften durch den Anwender ist mit der oben beschriebenen Anordnung nicht möglich. Statt dessen müssen für jeden (neuen) Farbstoff neue dichroitische Strahlteiler und Blockfilter kreiert werden.

In einer bekannten Anordnung wird das Fluoreszenzlicht mit Hilfe eines Prismas spektral aufgespalten. Das Verfahren unterscheidet sich von der oben beschriebenen Anordnung mit dichroitischen Filtern nur dadurch, dass der verwendete Filter in seiner Charakteristik einstellbar ist. Es wird jedoch weiterhin pro Punktdetektor vorzugsweise das Emissionsband eines Farbstoffs aufgezeichnet.

Eine schnelle lokale Messung des Emissionsspektrums ist mit beiden Anordnungen nur bedingt möglich, da die Einstellung des Emissionsbereiches auf mechanischen Bewegungen des dichroitischen Filters bzw. von Blenden beruht und somit der maximale spektrale Auflösung auf einige 5nm begrenzt ist. Eine hohe spektrale Auflösung wird z.B. dann benötigt wenn sich die Emissionsspektren wie in Abb. 3b dargestellt überlagern. Abb. 3b zeigt ein solches Verhalten von zwei in der Natur vorkommenden Farbstoffen CFP und GFP. Diese Farbstoffe sind zur Untersuchung von Lebendpräparaten besonders geeignet da sie keine toxischen Wirkungen auf die zu untersuchenden Proben ausüben.

Ist die Lage des Emissionsspektrums der verwendeten Farbstoffe unbekannt oder tritt eine von der Umgebung abhängige Verschiebung des Emissionsspektrums (Abb. 3c) auf, so ist eine hochaufgelöste Detektion der Farbstofffluoreszenzen notwendig. Die Wellenlängenverschiebung kann bis zu mehreren 10 nm betragen. Zur Vermessung des Emissionsspektrums in der Probe werden heutzutage Spektrometer auch in Verbindung mit einem LSM eingesetzt. Hierbei wird statt eines Punktdetektors ein herkömmliches meist hochauflösendes Spektrometer eingesetzt (Patent Dixon, et al. US 5,192,980). Diese können jedoch nur punktuell oder gemittelt über ein Gebiet ein Emissionsspektrum aufzeichnen. Es handelt sich also um eine Art der Spektroskopie. Zusätzlich wird das zumeist schwache Fluoreszenzsignal der Probe auf eine große Anzahl von Einzelkanälen im Spektrometer (meist 512 oder 1024 Einzelkanäle) verteilt bzw. wird ein schmales Fluoreszenzband entsprechend der spektralen Auflösung detektiert. Deshalb ist das Signal pro Einzelkanal äußerst gering und unter Umständen nicht mehr detektierbar.

Aufgabe der Erfindung ist daher die Schaffung eines neuen Verfahrens zur effizienten spektral aufgelösten Detektion von Fluoreszenzfarbstoffen mit einem Zeilendetektor. Die spektrale Auflösung ist bei den oben dargestellten optischen Anordnungen durch die Anzahl der Einzelkanäle festgelegt. Können nicht alle Einzelkanäle des Detektor simultan ausgelesen werden, so erfolgt nach dem Stand ein sequentielles Auslesen der Einzelkanäle so genanntes multiplexen. Das Multiplexen kann zum einem während der Pixelverweilzeit beim Scannen über eine Probe erfolgen. Dies hat den Nachteil, dass sich die Integrationszeit pro Einzelkanal in dem ein Signal detektiert werden kann um die Anzahl der Multiplexstellungen verringert. Zusätzlich bei der Vermessung breiter Fluoreszenzspektren geht das Signal in den nicht ausgelesenen Einzelkanälen verloren. In einer weiteren Methode des Multiplexens können die Signale der Einzelkanäle jeweils zwischengespeichert werden. Die einzelnen Speicher werden dann nacheinander ausgelesen. Während der Auslesezeit können jedoch keine neuen Daten aufgenommen werden. Deshalb würde sich bei dieser Art des Multiplexens die Auslesegeschwindigkeit des Zeilendetektors verringern. Die erfindungsgemäße Methode bzw. Anordnung hat somit folgende Aufgaben:

1. Durch eine einstellbare Summation über verschiedene Einzelkanäle wird immer das gesamte spektral aufgelöste Signal der Probe detektiert.
2. Durch die Summation über die Einzelkanäle ist eine einfache Digitalisierung der Summationskanäle wegen des höheren Signalpegels möglich.

Die Methode soll in bildgebenden wie in analytischen Mikroskopiersystemen eingesetzt werden können. Die Mikroskopsysteme sind bildgebende Systeme wie Laser-Scanning-Mikroskope zur dreidimensionalen Untersuchung von biologischen Präparaten mit einer optischen, räumlichen Auflösung bis zu 200 nm, Scanning-Nahfeld-Mikroskope zur hochaufgelösten Untersuchung von Oberflächen mit einer Auflösung von bis zu 10 nm. Fluoreszenzkorrelations-Mikroskope zur quantitativen Bestimmung von Molekülkonzentrationen und zur Vermessung von Molekül-Diffussionen. Weiterhin sind auf Fluoreszenzdetektion basierende Verfahren zum Screenen von Farbstoffen eingeschlossen.

In all den o.g. Systemen werden Fluoreszenzfarbstoffe zur spezifischen Markierung der Präparate eingesetzt. Die o.g. Aufgabe wird durch Verfahren und Anordnungen gemäß den unabhängigen Patentansprüchen gelöst. Bevorzugte Weiterbildungen sind Gegenstand der abhängigen Ansprüche.

## Beschreibung der Erfindung

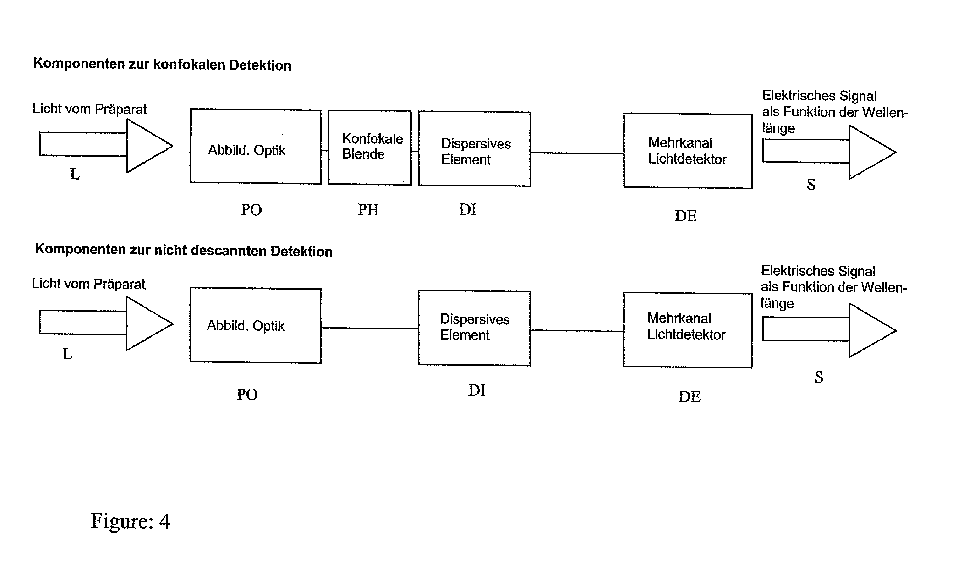

Hintergrund des erfindungsgemäßen Verfahrens ist eine spektral aufgespaltete Detektion der Fluoreszenz, wobei über verschiedenen Spektralkomponenten summiert wird. Dazu wird das Emissionslicht im Scanmodul oder im Mikroskop (bei Mehrphotonen-Absorption) mit Hilfe eines Elementes zur Trennung der Anregungsstrahlung von der detektierten Strahlung wie dem Hauptfarbteiler (MDB) oder einem AOTF gemäß 7346DE oder gemäß 7323DE vom Anregungslicht abgespalten. Bei Durchlichtanordnungen kann ein derartiges Element auch völlig entfallen. Ein Blockschaltbild der nun folgenden Detektoreinheit ist in Abb. 4 dargestellt. Das Licht der Probe wird mit Hilfe einer abbildenden Optik PO bei konfokaler Detektion durch eine Blende (Pinhole) PH fokussiert, wodurch Fluoreszenz, die außerhalb des Fokus entstand, unterdrückt wird. Bei einer nichtdescannten Detektion entfällt die Blende. Das Licht wird nun mit Hilfe eines winkeldispersiven Elements DI in seine Spektralanteile zerlegt. Als winkeldispersive Elemente kommen Prismen, Gitter und beispielsweise akusto optische Elemente in Frage. Das vom dispersiven Element in seine spektralen Komponenten aufgespaltete Licht wird im Anschluß auf einen Zeilendetektor DE abgebildet. Dieser Zeilendetektor DE mißt also das Emissionssignal in Abhängigkeit von der Wellenlänge und wandelt dies in elektrische Signale um. Mit Hilfe eines erfindungsgemäßen, im folgenden näher erläuterten Binningverfahrens erfolgt ein Zusammenschalten von einzelnen Kanälen, d.h. eine Summation über einzelne Kanäle des Zeilendetektors. Zusätzlich kann der Detektionseinheit noch ein Linienfilter zur Unterdrückung der Anregungswellenlängen vorgeschaltet werden.

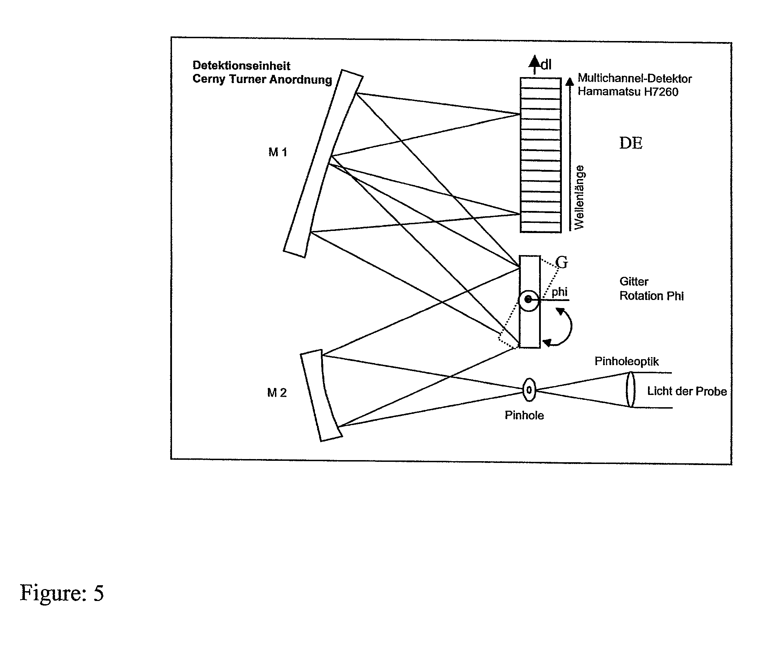

Eine mögliche Ausführungsform des optischen Strahlenganges der in Abb. 4 im Blockschaltbild gezeigten Detektoreinheit ist in Abb. 5 dargestellt. Der Aufbau beschreibt im wesentlichen einen Cerny Turner Aufbau. Bei einer konfokalen Detektion wird das Licht L der Probe mit der Pinholeoptik PO durch die konfokale Blende PH fokussiert. Bei einer nichtdescannten Detektion im Falle einer Mehrphotonen-Absorption kann diese Blende entfallen. Der erste abbildende Spiegel M2 kollimiert das Fluoreszenzlicht. Anschließend trifft das Licht auf ein Liniengitter G, beispielsweise ein Gitter mit einer Linienzahl von 651 Linien pro mm Das Gitter beugt das Licht entsprechend seiner Wellenlänge in verschiedene Richtungen. Der zweite abbildende Spiegel M1 fokussiert die einzelnen spektral aufgespaltenen Wellenlängenanteile auf die entsprechenden Kanäle des Zeilendetektors DE Besonders vorteilhaft ist der Einsatz eines Zeilen-Sekundärelektronenvervielfachers der Firma Hamamatsu H7260. Der Detektor besitzt 32 Kanäle und eine hohe Empfindlichkeit. Der freie Spektralbereich der oben beschriebenen Ausführungsform beträgt etwa 350 nm. Der freie Spektralbereich wird in dieser Anordnung gleichmäßig auf die 32 Kanäle des Zeilendetektors verteilt, wodurch sich eine optische Auflösung von etwa 10 nm ergibt. Der Einsatz der Einheit in einem bildgebenden System ist vorteilhaft, da das Signal pro Detektionskanal aufgrund des relativ breiten detektierten Spektralbandes noch relativ groß ist. Eine Verschiebung des Fluoreszenzspektrums kann durch eine Verdrehung beispielsweise des Gitters, von M1, von M2, um den Winkel phi und/oder durch eine Verschiebung des Zeilenempfängers in Richtung der Wellenlängenaufspaltung um dl erfolgen (siehe Abb).

Die spektrale Auflösung ist bei den oben dargestellten optischen Anordnungen durch die Anzahl der Einzelkanäle festgelegt. In den oben beschriebenen Ausführungsformen detektiert jeder Einzelkanal ein Spektralband des Emissionsspektrums mit einer spektralen Breite von ca. 10 nm. Können nicht alle Einzelkanäle des Detektor simultan ausgelesen werden, so erfolgt nach dem Stand ein sequentielles Auslesen der Einzelkanäle (Multiplexen). Erfindungsgemäß wird hierbei über Einzelkanäle mit verschiedenen Mustern summiert.

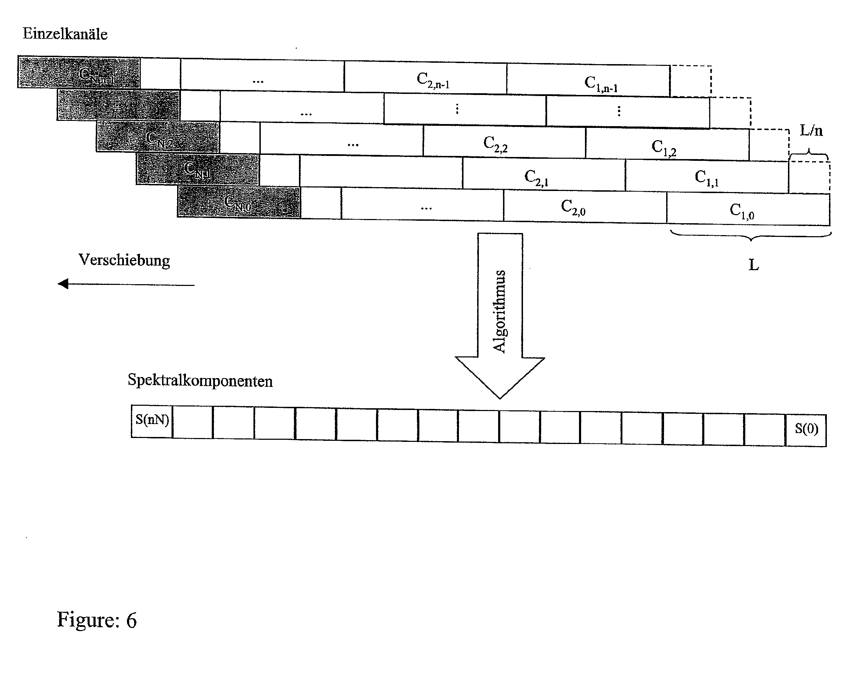

Können beispielsweise 8 Kanäle simultan ausgelesen werden, so erfolgt bei Verwendung des oben beschriebenen 32 Kanaldetektors eine Summation über jeweils 4 Kanäle. Das Auslesen der gesamten N=32 Kanäle erfolgt, dann in n=4 Schritten, wobei das Summationsfenster um jeweils einen Einzelkanal (L/n=4/4=1) verschoben wird. Abb. 6 zeigt schematisch jeweils in einer Zeile die verschiedenen Einzelkanäle des Zeilendetektors, deren N Einzelsignale C entsprechen.

Die gemessenen Signale der Einzelkanäle werden mit $c_{k,j}$ (in Abb. 6 als

Blöcke dargestellt) bezeichnet, wobei $k = 1..N$ die Kanalnummer und $j = 0..n-1$ die Vielfachen der Verschiebung L/n sind. Fällt das Signal am Rand des Detektors nicht ab, so kann wie in Abb. 6 grau dargestellt, der letzte Einzelkanal des Detektors so abgedeckt (ausgeblendet) werden, dass nur eine Breite von L/n zur Messung zur Verfügung steht. Dies ist zur Vermeidung von Artefakten bei der Berechnung notwendig.

Zur Berechnung der N mal n Spektralwerte $S_m$ werden nun Differenzen von Summen über Einzelkanäle nach folgendem Algorithmus gebildet:

$$S_1 = c_{1,0}{}' = \sum_{i=1}^{N} c_{i,0} - \sum_{i=1}^{N-1} c_{i,1}$$

$$S_2 = c_{1,1}{}' = \sum_{i=1}^{N} c_{i,1} - \sum_{i=1}^{N-1} c_{i,2}$$

....

$$S_{n-1} = c_{1,n-2}{}' = \sum_{i=1}^{N} c_{i,n-2} - \sum_{i=1}^{N-1} c_{i,n-1}$$

$$S_n = c_{1,n-1}{}' = \sum_{i=1}^{N-1} c_{i,n-1} - \sum_{i=2}^{N} c_{i,0} - \sum_{m=1}^{n-2} c_{N,m}$$

....

$$S_{k\cdot n+1} = c_{k,0}{}' = \sum_{i=k}^{N} c_{i,0} - \sum_{i=k}^{N-1} c_{i,1}$$

$$S_{k\cdot n+2} = c_{k,1}{}' = \sum_{i=k}^{N} c_{i,1} - \sum_{i=k}^{N-1} c_{i,2}$$

....

$$S_{k\cdot n+j+1} = c_{k,j}{}' = \sum_{i=k}^{N} c_{i,j} - \sum_{i=k}^{N-1} c_{i,j+1}$$

....

$$S_{(k+1)\cdot n-1} = c_{k,n-2}{}' = \sum_{i=k}^{N} c_{i,n-2} - \sum_{i=k}^{N-1} c_{i,n-1}$$

$$S_{(k+1)\cdot n} = c_{k,n-1}{}' = \sum_{i=k}^{N-1} c_{i,n-1} - \sum_{i=k+1}^{N-1} c_{i,0} - \sum_{m=1}^{n-2} c_{N,m}$$

$$S_{N\cdot n-n} = c_{N,0}{}' = c_{N,0}$$

$$S_{N\cdot n-n+1} = c_{N,1}{}' = c_{N,1}$$

....

$$S_{N\cdot n} = c_{N,n-1}{}' = c_{N,n-1}$$

Die so berechneten Spektralwerte S (Zwischenwerte) können im Anschluß graphisch auf dem angezeigten Bild, z.B. während eines Spektralscans dargestellt werden.

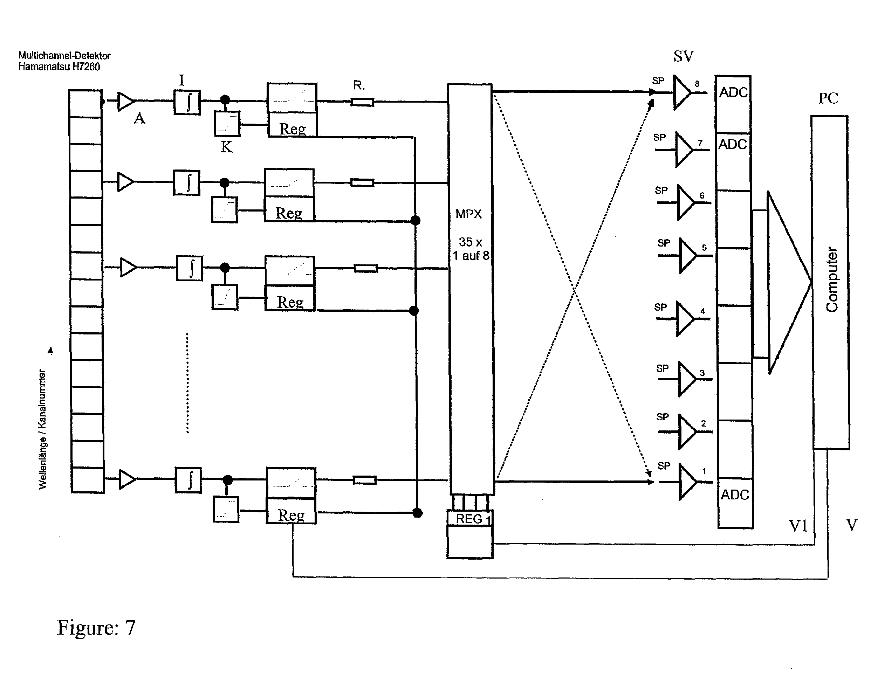

Die Summation über verschiedene Einzelkanäle und damit die Messung der $c_{k,j}$ ist in Abb. 7 schematisch dargestellt. Die Signale der Einzelkanäle werden hierbei wiederum mit einem Verstärker A in Spannungssignale transformiert. Anschließend werden die einzelnen Spannungssignale in einem Integrator 1 während der Pixelverweilzeit aufintegriert.

Dem Integrator nachgeschaltet ist ein Komparator K der einen Vergleich des aufintegrierten Signals mit einem Referenzsignal durchführt.

Falls das aufintegrierte Signal kleiner als die Komparatorschwelle ist, so würde in dem entsprechenden Einzelkanal kein oder ein zu kleines Fluoreszenzsignal gemessen. In einem solchen Falle soll das Signal des Einzelkanals nicht weiter verarbeitet werden, da dieser Kanal nur einen Rauschanteil zum Gesamtsignal beiträgt. Der Komparator betätigt in einem solchen Falle über SR einen Schalter S und der Einzelkanal wird für den gerade gemessenen Pixel ausgeschalten. Mit Hilfe der Komparatoren in Kombination mit den Schaltern wird also automatisch der für den gerade gemessenen Bildpunkt relevante Spektralbereich ausgewählt.

Im Anschluß kann das integrierte Spannungssignal der Einzelkanäle mit einem mit dem Switch-Register SR verbundenen Demultiplexer MPX auf verschiedene Summenpunkte durch das Register Reg1 geschaltet werden. In Abb. 7 sind 8 verschiedene Summenpunkte SP eingezeichnet. Die Steuerung des Registers Reg1 erfolgt durch eine Steuerleitung V1 vom Rechner. Die Steuerung des Summationsmusters kann pixelgenau erfolgen, d.h. in einem Zeitraum von einigen μs.

Jeweils ein Summenpunkt SP bildet jeweils einen Teil des Summationsverstärkers SV, der die Summation der angewählten Einzelkanäle durchführt. Insgesamt sind in Abb. 7 8 Summenverstärker SV dargestellt. Die Summensignale $c_{k,j}$ werden im Anschluß mit jeweils einem Analog-Digital-Wandler in digitale Signale umgewandelt und vom Computer oder DSP weiterverarbeitet. Die Summenverstärker SV können auch mit einer veränderlichen nichtlinearen Kennlinie betrieben.

In der oben beschriebenen Anordnung wurde eine Integratorschaltung zur Detektion der Einzelkanalsignale verwendet. Uneingeschränkt kann jedoch auch eine Photonenzählung in den Einzelkanälen erfolgen.

Eine Änderung des Summationsmusters durch V1 kann bildweise nach der Aufnahme oder während des Scannens eines Bildpunktes bzw. einer Bildzeile / -spalte erfolgen Die Anfordungen an die Schaltgeschwindigkeit des MPX hängen von der Art der Einstellung ab. Erfolgt beispielsweise eine bildpunktweise Einstellung so muß der Scan innerhalb der Integrationszeit für diesen Bildpunkt erfolgen (also in einigen Mikrosekunden). Erfolgt die Einstellung bildweise so muß die Scan innerhalb von einigen Millisekungen bis Sekunden erfolgen.

Die Berechnung der Signale der Einzelkanäle erfolgt mit dem oben beschriebenen Algorithmus unter Verwendung der $c_{k,j}$.

In den beide oben beschriebenen Anordnungen wurde vorzugsweise eine Integratorschaltung zur Detektion der Einzelkanalsignale verwendet.

Uneingeschränkt kann jedoch auch eine Photonenzählung in den Einzelkanälen erfolgen und die Photonenzahlen addiert werden.

Vorteilhaft erfolgt erfindungsgemäß eine speichermäßige bildpunktweise Zuordnung der erfaßten jeweiligen Wellenlängenverteilung ( λ- stack) zur jeweiligen Bildpunktkoordinate x,y oder z und/ oder eine zusätzliche zeitliche Zuordnung bei gemessenen zeitveränderlichen Abläufen.

**Patentansprüche**

1. Verfahren zur optischen Erfassung von charakteristischen Größen einer beleuchteten Probe, wobei das von der Probe rückgestreute, reflektierte und/ oder fluoreszierte und/ oder transmittierte Signal mit einem ortsauflösenden Detektor in mehreren Kanälen detektiert wird, indem die von der Probe kommende Strahlung spektral aufgespalten auf den Detektor abgebildet wird, , wobei eine Verknüpfung von Detektionskanälen erfolgt, so daß die Anzahl der ausgelesenen und weiterverarbeiteten Meßwerte kleiner ist als die Zahl der Detektionskanäle

2. Verfahren nach Anspruch 1, wobei die Verknüpfung eine Summierung ist

3. Verfahren nach Anspruch 1 oder 2 , wobei eine Verschiebung der verknüpften Meßwerte erfolgt und/ oder die Zahl der verknüpften Detektorkanäle geändert wird

4. Verfahren nach einem der vorangehenden Ansprüche, wobei die Verschiebung um mindestens einen Detektorkanal erfolgt

5. Verfahren nach einem der vorangehenden Ansprüche, wobei die Größe der Verschiebung veränderbar ist

6. Verfahren nach einem der vorangehenden Ansprüche, wobei mittels eines Algorithmus aus den ausgelesenen Meßwerten Zwischenwerte zum Zwecke des effizienten Auslesens einer Detektorzeile ermittelt werden.

7. Verfahren nach einem der vorangehenden Ansprüche, wobei eine Verschiebung des Summationsmusters entlang eines Zeilendetektors durch einen Multiplexer erfolgt.

8. Verfahren nach einem der vorangehenden Ansprüche, wobei eine spektral aufgelöste Messung von Spektren über ein dem Detektor vorgeordnetes dispersives Element erfolgt

9. Verfahren nach einem der vorangehenden Ansprüche, wobei die spektral aufgespaltene Strahlung relativ zum Detektor verschoben wird.

10. Verfahren nach einem der vorangehenden Ansprüche, wobei das dispersive Element um mindestens eine Achse schwenkbar ist

11. Verfahren nach einem der vorangehenden Ansprüche, wobei bei feststehendem dispersiven Element in mindestens einer seiner Schwenkachsen die räumlich verändernde Wirkung der Schwenkung in dieser Achse durch eine Scaneinheit und/oder Verschiebung des Detektors erfolgt.

12. Verfahren nach einem der vorangehenden Ansprüche,wobei eine speichermäßige bildpunktweise Zuordnung der erfaßten jeweiligen Wellenlängenverteilung (λ- stack) zur jeweiligen Bildpunktkoordinate x,y oder z und/ oder eine zusätzliche zeitliche Zuordnung bei gemessenen zeitveränderlichen Abläufen erfolgt.

Figure: 1

Figure: 2

Figure: 3

**Komponenten zur konfokalen Detektion**

Licht vom Präparat → L → | Abbild. Optik (PO) | Konfokale Blende (PH) | Dispersives Element (DI) | — | Mehrkanal Lichtdetektor (DE) | → Elektrisches Signal als Funktion der Wellenlänge → S

**Komponenten zur nicht descannten Detektion**

Licht vom Präparat → L → | Abbild. Optik (PO) | — | Dispersives Element (DI) | — | Mehrkanal Lichtdetektor (DE) | → Elektrisches Signal als Funktion der Wellenlänge → S

Figure: 4

EP 1 302 804 A2

Figure: 5

EP 1 302 804 A2

Figure: 6

Figure: 7